Europäisches Patentamt

European Patent Office

Office européen des brevets

(19)

(11) Veröffentlichungsnummer: **0 127 137 B1**

(12) **EUROPÄISCHE PATENTSCHRIFT**

(45) Veröffentlichungstag der Patentschrift: **02.01.91**

(21) Anmeldenummer: **84105938.9**

(22) Anmeldetag: **24.05.84**

(51) Int. Cl.⁵: **H 04 Q 3/00**, H 04 M 19/00, H 04 M 3/22

(54) **Verfahren zur Ermittlung des Schleifenzustandes einer Teilnehmeranschlussleitung.**

(30) Priorität: **30.05.83 DE 3319560**

(43) Veröffentlichungstag der Anmeldung:
**05.12.84 Patentblatt 84/49**

(45) Bekanntmachung des Hinweises auf die
Patenterteilung:
**02.01.91 Patentblatt 91/01**

(84) Benannte Vertragsstaaten:
**AT BE CH DE FR GB LI NL SE**

(56) Entgegenhaltungen:
**EP-A-0 026 411**
**DE-A-2 939 008**
**US-A-4 355 209**

(73) Patentinhaber: **Siemens Aktiengesellschaft**
**Wittelsbacherplatz 2**
**D-8000 München 2 (DE)**

(72) Erfinder: **Leutner, Klaus, Dipl.-Ing.**
**Goerdelerstrasse 2**
**D-8025 Unterhaching (DE)**
Erfinder: **Kopetzky, Horst**
**Lannerstrasse 11**
**D-8025 Unterhaching (DE)**
Erfinder: **Nagler, Werner, Dipl.-Ing.**
**Lipowskystrasse 8**
**D-8000 München (DE)**
Erfinder: **Ossler, Walter, Dipl.-Ing.**
**Wallbergstrasse 38**
**D-8034 Germering (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft ein Verfahren zur Ermittlung des Schleifenzustandes einer Teilnehmeranschlußleitung, die je nach vermittlungstechnischem Betriebszustand hochohmig oder niederohmig an eine Speisespannungsquelle angeschlossen ist, durch eine Indikationsschaltung, die den Schleifenzustand charakterisierende Potentialverhältnisse auf den Adern der Teilnehmeranschlußleitung unter Zugrundelegung von dem jeweiligen Betriebszustand entsprechenden Ansprechschwellen bewertet, wobei, um durch Nebenschlüsse bedingte Fehlfunktionen zu verhindern, bei Schleifenschlußanzeige durch die Indikationsschaltung aus dem Betriebszustand "Ruhe" heraus eine erste Wartezeitspanne abgewartet wird, bevor ein Verbindungsaufbau abgeschlossen wird bzw., sofern während dieser ersten Wartezeitspanne eine Schleifenunterbrechungsanzeige erfolgt, eine zweite Wartezeitspanne abgewartet wird, bevor eine entsprechende Meldung abgegeben wird oder, sofern während dieser zweiten Wartezeitspanne wieder eine Schleifenschlußanzeige erfolgt, eine Sperrung der Teilnehmeranschlußleitung gegen eine weitere Belegung veranlaßt wird.

Mit einem vorgeschlagenen Verfahren dieser Art (DE—A 33 07 806.8) kann vermieden werden, daß dann wenn der Ableitwiderstand zwischen einer Ader der Teilnehmeranschlußleitung und einem Erdpotential führenden Schaltungspunkt z.B. durch eingedrungene Feuchtigkeit unter einen zugelassenen Wert absinkt, eine Störung auftritt, die darin liegt, daß es fälschlicherweise zu einem dauernden Wechsel zwischen einer Schleifenschlußanzeige und einer Schleifenunterbrechungsanzeige kommt. Wenn nämlich die vorgeschlagenen Maßnahmen nicht ergriffen werden, wird ein solches Absinken des Ableitwiderstandes im Betriebszustand "Ruhe" zur Folge haben, daß die Indikationsschaltung ein Schleifenschlußsignal liefert, das u.a. eine Umschaltung von hochohmiger Anschaltung an die Speisespannungsquelle auf niederhohmige Anschaltung bewirkt, wodurch sich auf der Teilnehmeranschlußleitung Potentialverhältnisse einstellen, die zur Abgabe eines Schleifunterbrechungssignals mit der Folge einer Rückschaltung auf hochohmigen Anschluß an die Speisespannungsquelle erzeugt wird, so daß sich bei weiterem Fortbestand des niederohmigen Ableitweges die genannten Vorgänge wiederholen.

Bei dem vorgeschlagenen Verfahren wird bei Auftreten eines Schleifenschlußsignals aus dem Betriebszustand "Ruhe" heraus eine erste und ggf, eine zweite Wartezeitspanne derart wirksam geschaltet, daß zwischen einem echten und einem aufgrund eines niedrigen Ableitwiderstandes abgegebenen Schleifenschlußsignal bzw. zwischen einem echten Schleifenunterbrechungssignal, das unmittelbar im Anschluß an ein Schleifenschlußsignal wegen einer entsprechenden beabsichtigten oder unbeabsichtigten Betätigung der Gabel in der Teilnehmerstation auftritt und einem fehlerbedingten Schleifenunterbrechungssignal unterschieden werden kann. Darüberhinaus ist bei der vorgeschlagenen Schaltungsanordnung die Möglichkeit vorgesehen, dann wenn das Vorliegen eines zu niedrigen Ableitwiderstandes feststeht, die Teilnehmeranschlußleitung gegen weitere Belegungen zu sperren und ggf. einen Fehler zu signalisieren bis entweder der Ableitwiderstand wieder von selbst über die Toleranzgrenze angestiegen ist oder aber die Fehlerursache beseitigt worden ist.

Bei dem vorgeschlagenen Verfahren wird, wie angedeutet, der Schleifenzustand der Teilnehmeranschlußleitung durch eine die Potentialverhältnisse auf den Adern der Teilnehmeranschlußleitung bewertende Indikationsschaltung ermittelt, wobei bei der Anreizindikation im Ruhezustand, in den die Teilnehmeranschlußleitung hochohmig an der Speisespannungsquelle liegt, bei der Schleifenindikation im Gesprächzustand, in dem die Teilnehmeranschlußleitung niederohmig an der Speisespannungsquelle liegt und im Rufzustand, in dem die Teilnehmeranschlußleitung ebenfalls niederohmig aber mit einem anderen Widerstandswert an der Speisespannungsquelle liegt, jeweils andere Ansprechschwellwerte zugrunde gelegt werden müssen. Dies kann dadurch geschehen, daß jeweils andere den einzelnen Betriebszuständen zugeordnete Teile der Indikationsschaltung in Aktion treten, oder aber daß bei ein und derselben Indikationsschaltung jeweils andere Ansprechschwellwerte wirksam geschaltet werden.

Bei einem weiteren vorgeschlagenen Verfahren (EP—A—0 026 411) wird eine beeinflussungsunabhängige Feststellung des Schaltzustandes einer Teilnehmeranschlußleitung abgestrebt, wobei unter Beeinflussungen Ableitströme durch Nebenschlüsse und eingekoppelte Wechselspannungsanteile verstanden werden. Um ein Fehlansprechen der Indikationsschaltung bei geringen Nebenschlüssen zu vermeiden, wird dort vorgeschlagen, den Ansprechschwellwert im hochohmigen Betriebszustand der Teilnehmeranschlußleitung gegenüber dem niederohmigen Betriebszustand auf ein höheres Niveau zu legen.

Bei beiden vorgeschlagenen Verfahren kann es vorkommen, daß die Indikationsschaltung, wie sie bei der Anreizindikation im Betriebszustand "Ruhe" wirksam ist, auf einen geringfügigen Nebenschluß noch nicht anspricht, weil dieser noch relativ hochomig ist, und die betreffende Teilnehmeranschlußleitung wegen des geringfügigen Nebenschlusses auch nicht gegen eine Belegung gesperrt wird. Wird nun der Teilnehmer, der an einer solchen Teilnehmeranschlußleitung angeschlossen ist, angerufen, in welchem Falle der Betriebszustand "Ruf" hergestellt wird und die Indikationsschaltung als Rufindikationsschaltung wirkt, dann ist nicht ausgeschlossen, daß der vorliegende Nebenschluß zu einer Schleifenschlußmeldung durch diese Rufindikationsschaltung führt, mit der Folge, daß, obwohl kein Gespräch zustande gekommen ist, der anrufende Teilnehmer mit Gesprächsgebühren belastet wird.

Aufgabe der vorliegenden Erfindung ist es daher, ein Verfahren anzugeben, mit der dieser unerwünschte Effekt vermieden werden kann.

Diese Aufgabe wird mit einem Verfahren der obengenannten Art gelöst, das dadurch gekennzeichnet ist, daß die Indikationsschaltung so eingestellt wird, daß sie bei Vorliegen des Betriebszustandes "Ruf" der Teilnehmeranschlußleitung eine geringere Empfindlichkeit bezüglich des Ansprechens der Schleifenschlußanzeige aufweist als bei Vorliegen des Betriebszustandes "Ruhe".

Aufgrund der erfindungsgemäßem Merkmale ist gewährleistet, daß ein Nebenschluß, soweit er überhaupt zu Reaktionen geführt, immer auf die Indikationsschaltung in ihrer Eigenschaft als Anreizindikationsschaltung wirkt, woraufhin dann die Teilnehmeranschlußleitung gegen eine Belegung gesperrt wird, so daß eine Konstellation, in der die Rufindikationsschaltung einer durch Nebenschluß gestörten Teilnehmeranschlußleitung aufgrund dieses Nebenschlusses fälschlicherweise ansprechen könnte, überhaupt nicht möglich ist.

Nachstehend wird das erfindungsgemäße Verfahren anhand eines Ausführungsbeispiels unter Bezugnahme auf eine Zeichnung näher erläutert.

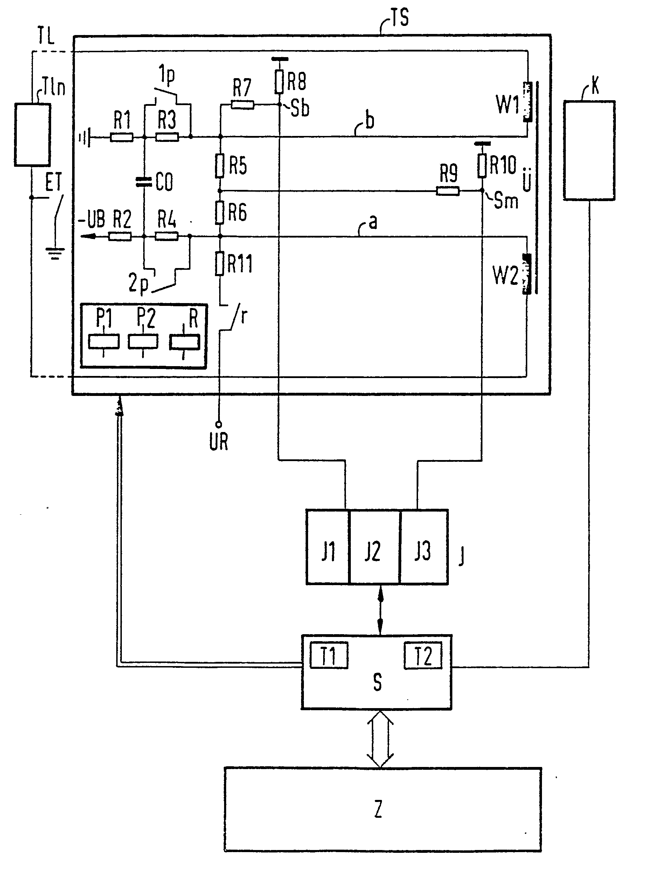

Die Zeichnung zeigt im zum Verständnis der Erfindung erforderlichen Umfang eine Teilnehmeranschlußschaltung TS für den Anschluß einer Teilnehmeranschlußleitung TL, deren Schleifenzustand überwacht werden soll, an eine nicht näher dargestellte Vermittlungsstelle, die entsprechend dem erfindungsgemäßen Verfahren arbeitet.

Bestandteil dieser Teilnehmeranschlußschaltung ist eine aus den Widerständen R1 bis R4 gebildete Speiseschaltung, über die den Adern a und b der Teilnehmeranschlußleitung TL an eine Speisespannungsquelle gelegt sind, die eine Speisespannung UB liefert. Der Anschluß der Leitungsadern erfolgt dabei jeweils über einen niederohmigen Widerstand R1 bzw. R2 sowie über einen dazu in Reihe liegenden hochohmigen Widerstand R3 bzw. R4. Die hochohmigen Widerstände R3 und R4 sind jeweils durch Schaltstrecken 1p und 2p jeweils eines Relais P1 bzw. P2 niederohmig überbrückbar. Weiterer Bestandteil der Speiseschaltung ist ein Kondensator CO, der die Verbindungspunkte der Widerstände R1 und R2 einerseits und der Widerstände R3 und R4 andererseits verbindet.

Die Teilnehmeranschlußschaltung TS bildet Anschaltepunkte für eine Indikationsschaltung I zur Ermittlung des Schleifenzustandes der Teilnehmeranschlußleitung TL. Hierzu sind die Leitungsadern a und b durch die Reihenschaltung hochohmiger Widerstände R5 und R6 überbrückt, wobei zwischen dem Verbindungspunkt dieser Widerstände und Erdpotential ein aus den Widerständen R9 und R10 gebildeter Spannungsteiler liegt, dessen Teilerpunkt Sm den einen Anschaltpunkt der Indikationsschaltung I bildet. Der zweite Anschaltpunkt Sb ist der Teiler eines aus den Widerständen R7 und R8 gebildeten, zwischen der Leitungsader b und Erdpotential liegenden Spannungsteilers. Die Teilnehmeranschlußschaltung zeigt ferner die zweidrahtseitigen Wicklungen W1 und W2 eines Gabelübertragers Ü für den Zweidraht-Vierdrahtübergang zwischen der Teilnehmeranschlußleitung TL und dem vierdrähtig arbeitenden, hier nur angedeuten Koppelfeld K der Vermittlungsstelle, zu der die gezeigte Teilnehmeranschlußschaltung gehört. Es ist ferner ein Relais R mit einem Kontakt r angedeutet, über den eine Rufwechselspannung UR auf die Teilnehmeranschlußleitung gekoppelt werden kann. Die Indikationsschaltung ist in drei Teile I1, I2 und I3 unterteilt, die bei jeweils einem anderen Betriebszustand wirksam werden. So dient ein erster Teil der Schleifenschlußindikation aus dem Ruhezustand heraus, also der Anreizindikation, ein zweiter Teil der Schleifenindikation im Betriebszustand "Gespräch" und ein dritter der Schleifenindikation im Betriebszustand "Ruf". Die Indikationsschaltung I kann in der Praxis auch so realisiert sein, daß das Wirksamschalten von Teilschaltungen in den einzelnen Betriebszuständen sich auf das Wirksamschalten jeweils eines anderen Ansprechschwellwertes beschränkt. Sie kann zentral für mehrere Teilnehmeranschlußleitungen vorgesehen sein, ohne daß dies näher dargestellt ist. Wie die Figur zeigt, korrespondiert sie mit der Steueung Z der Vermittelungsstelle über eine Schnittstellenschaltung S, über die auch die von der Steuerung an die Teilnehmerschaltung abgegebenen Befehle laufen.

Erfindungsgemäß ist die Indikationsschaltung I in ihrer Eigenschaft als Schaltungsanordnung zur Anreizindikation empfindlicher als in ihrer Eigenschaft als Schaltungsanordnung zur Rufindikation.

In der Schnuttstellenschaltung S sind zwei Zeitglieder T1 und T2 angedeutet, die für die Einhaltung der vorstehend angedeuteten Wartezeitspannen verantwortlich sind.

Bei der nachstehenden Erläuterung des erfindungsgemäßen Verfahrens wird von Betriebszustand "Ruhe" der Teilnehmeranschlußleitung ausgegangen, in dem wegen des aufgelegten Hörers bei der an die Teilnehmeranschlußleitung TL angeschlossenen Teilnehmerstation Tln die Teilnehmerleitungsschleife unterbrochen ist und die Schaltstrecken 1p und 2p der Relais P1 und P2 geöffnet sind, also die Teilnehmeranschlußleitung hochohmig an der Speisespannungsquelle liegt.

Ein Abnehmen des Hörers bei der Teilnehmerstation Tln bewirkt einen Schleifenschluß und damit eine derartige Veränderung der Potentialverhältnisse an den Schaltungspunkten Sm und Sb, daß der bei der Indikationsschaltung I für die Anreizindikation wirksame Schwellwert überschritten wird und diese ein Schleifenschlußsignal abgibt.

Ein solches Schleifenschlußsignal entsteht aber auch dann, wenn bei aufgelegtem Hörer aufgrund einer Störung der Ableitwiderstand zwischen den Leitungsadern der Teilnehmeranschlußleitung unter den vorgegebenen Mindestwert absinkt oder Erdpotential an einer Leitungsader anliegt.

Wenn nach dem Wechsel auf niederohmige Anschaltung an die Speisespannungsquelle die genannte Störung andauert, stellen sich an den Schaltungspunkten Sm und Sb Potentialverhältnisse ein, die den Potentialverhältnissen bei unterbrochener Leitungsschleife entsprechen, so daß die Indikationsschaltung wieder abfällt.

Bei dem vorgeschlagenen, hier vorausgesetzten Verfahren wird nun aber so vorgegangen, daß bei Auftreten eines Schleifenschlußsignals aus dem Betriebszustand "Ruhe" heraus zwar unverzüglich an die Steuerung eine Belegungsmeldung abgegeben wird und danach ein Wechsel von hochohmiger Anschaltung auf niederohmige Anschaltung der Teilnehmeranschußleitung an die Speisespannungsquelle durch Ansteuerung der Relais P1 und P2 veranlaßt wird, gleichzeitig aber eine Wartezeitspanne, beispielsweise durch Setzen des Zeitgliedes T1 wirksam geschaltet wird. Wenn diese Wartezeitspanne verstreicht, ohne daß die Indikationsschaltung ein Schleifenunterbrechungssignal geliefert hat, ist dies ein Hinweis darauf, daß das Schleifschlußsignal tatsächlich die Folge des Aushängens beim Teilnehmer war, so daß nunmehr sich die weiteren für einen Verbindungsaufbau erforderlichen Vorgäng anschließen können.

Tritt dagegen während des Verlaufs der ersten Wartezeitspanne wieder ein Schleifunterbrechungssignal auf, so kann dies, wie obenstehend angegeben, die Folge eines zu niedrigen Ableitwiderstandes oder Erdschlusses sein, aber auch damit zusammenhängen, daß bei der Teilnehmerstation wieder eingehängt oder vorzeitig mit einer Wahl begonnen wurde. Um hier eine Unterscheidung vornehmen zu können, wird bei Auftreten eines Schleifenunterbrechungssignals während der ersten Wartezeitspanne unverzüglich eine Umschaltung auf hochohmigen Anschluß der Teilnehmeranschlußleitung an die Speisespannungsquelle veranlaßt und gleichzeitig eine zweite Wartezeitspanne wirksam geschaltet, beispielsweise durch Setzen des Zeitgliedes T2. Überdauern die Potentialverhältnisse, die von der Indikationsschaltung als Schleifenunterbrechung gewertet worden sind, diese zweite Wartezeitspanne dann wird ein das Einhängen bei der Teilnehmerstation meldendes Signal an die Steuerung abgegeben, da unter der Voraussetzung, daß die zweite Wartezeitspanne kürzer als die mindestens zu erwartende Zeitspanne zwischen einem Einhängen und einem Aushängen bei der Teilnehmerstation aber länger als der längsmöglichste Wählimpuls ist, dann feststeht, daß das abgegebene Schleifunterbrechungssignal tatsächlich die Folge des Einhängens bei der Teilnehmerstation war. Wenn dagegen während der zweiten Wartezeitspanne wieder das Schleifenschlußsignal erscheint, steht fest, daß dieses Schleifenschlußsignal auf einen zu niedrigen Ablaufwiderstand oder vorzeitige Wahl zurückzuführen ist. Es wird daher unter Beibehaltung des hochohmigen Anschlusses der Teilnehmeranschlußleitung an die Speisespannungsquelle ein Betriebszustand eingestellt, in dem weder eine Belegung erfolgen kann, noch von der Teilnehmerstation aus weitere vermittlungstechnische Vorgänge veranlaßt werden können, beispielsweise Einstellvorgänge aufgrund der Wahl. Dieser Zustand dauert so lange an, bis wieder ein Schleifenunterbrechungssignal auftritt, das dann die Folge des Wegfalls der bis dahin vorliegenden Störung ist.

Es kann auch vorgesehen sein, ein Fehlersignal zu erzeugen, wenn das Schleifenunterbrechungssignal in diesem Stadium zu lange ausbleibt, also nicht mehr zu erwarten ist, daß der Ableitwiderstand wieder von selbst über den vorgegebenen Grenzwert ansteigt.

Wenn erfindungsgemäß gewährleistet ist, daß die Indikationsschaltung bezüglich des Ansprechens auf Schleifenschluß im Betriebszustand "Ruhe" empfindlicher eingestellt wird als im Betriebszustand "Ruf" d.h. daß die Indikationsschaltung im Betriebszustand "Ruhe" bereits bei einem im Vergleich zum Betriebszustand "Ruf" größeren Ableitwiderstand Schleifenschluß anzeigt, kann es nicht vorkommen, daß ein Schleifenschluß zwar im Betriebszustand "Ruhe" ohne Konzequenzen bleibt, aber dann wenn der Teilnehmer, der mit der betreffenden Teilnehmeranschlußleitung verbunden ist, angerufen wird, die Indikationsschaltung in der Teilnehmeranschlußleitung dann also als Rufindikationsschaltung wirkt, diese fälschlicherweise einen Schleifenschluß, als das Abheben beim Teilnehmer signalisiert, und damit eine Gebührenzählung veranlaßt, was insbesondere bei einem Anruf von einem Münzfernsprecher aus das ungerechtfertigte Abkassieren zur Folge hätte. Eine derartige gestörte Teilnehmeranschlußleitung ist aufgrund der erfindungsgemäßen Maßnahme nämlich in jedem Fall vorher gegen eine Belegung gesperrt.

**Patentanspruch**

Verfahren zur Ermittlung des Schleifenzustandes einer Teilnehmeranschlußleitung (TL), die je nach vermittlungstechnischem Betriebszustand hochomig oder niederohmig an eine Speisespannungsquelle anschlossen ist, durch eine Indikationsschaltung (I), die den Schleifenzustand charakterisierende Potentialverhältnisse auf den Adern (a, b) der Teilnehmeranschlußleitung (TL) unter Zugrundelelung von dem jeweiligen Betriebszustand entsprechenden Ansprechswellen bewertet, wobei, um durch Nebenschlüsse bedingte Fehlfunktionen zu verhindern, bei Schleifenschlußanzeige durch dien Indikationsschaltung (I) aus den Betriebszustand "Ruhe" heraus eine erste Wartezeitspanne (TI) abgewartet wird, bevor ein Verbindungsaufbau abgeschlossen wird, bzw., sofern während dieser ersten Wartezeitspanne (T1) eine Schleifenunterbrechungsanzeige erfolgt, eine zweite Wartezeitspanne (T2) abgewartet wird, bevor eine entsprechende Meldung abgegeben wird, oder, sofern während dieser zweiten Wartezeitspanne (T2) wieder eine Schleifenschlußanzeige erfolgt, eine Sperrung der Teilnehmeranschlußleitung (TL) gegen eine Belegung veranlaßt wird, dadurch gekennzeichnet, daß die Indikationsschaltung (I) so eingestellt wird, daß sie bei Vorliegen des Betriebszustandes "Ruf" der Teilnehmeranschlußleitung (TL) eine geringere Empfindlichkeit bezüglich des Ansprechens der Schleifenschlußanzeige aufweist als bei Vorliegen des Betriebszustandes "Ruhe".

**Revendication**

Procédé pour déterminer l'état de boucle d'une ligne d'abonné (TL), qui est raccordée à une source de tension d'alimentation selon une liaison à forte valeur ohmique ou à faible valeur ohmique en fonction de l'état technique de commutation, au moyen d'un circuit indicatif (I), qui évalue l'état de boucle de conditions caractéristiques de potentiel dans les conducteurs (a, b) de la ligne d'abonné (TL) en se basant sur des seuils de réponse correspondant aux états respectifs de fonctionnement, et selon lequel, pour empêcher des fonctionnements erronés conditionnés par des dérivations, lorsque le circuit indicateur (I) indique une fermeture de boucle, une attente intervient pendant un premier intervalle de temps d'attente (T1) à partir de l'état de fonctionnement "repos", avant que l'établissement d'une liaison soit terminée, ou, dans la mesure où pendant ce premier intervalle de temps d'attente (T1), il apparaît une indication d'interruption de la boucle, une attente se produit pendant un second intervalle de temps d'attente (T2) avant qu'une signalisation correspondante soit délivrée, ou, dans la mesure où pendant ce second intervalle de temps d'attente (T2), il apparaît à nouveau une indication de fermeture de boucle, un blocage de la ligne d'abonné (TL) vis-à-vis d'une occupation est déclenché, caractérisé par le fait que le circuit indicateur (I) est réglé de manière que, dans le cas de la présence de l'état de fonctionnement "appel" de la ligne d'abonné (TL), il possède une sensibilité plus faible vis-à-vis de la réponse de l'indication de fermeture de boucle, que dans le cas de la présence de l'état de fonctionnement "repos".

**Claim**

Process for determining the loop condition of a subscriber line (TL) which, depending on the operating state of call processing, is connected with high impedance or low impedance to a feed voltage source, by means of an indication circuit (I) which evaluates potential conditions characterizing the loop condition on wires (a, b) of the subscriber line (TL) on the basis of response thresholds corresponding to the respective operating condition, during which process, in order to prevent malfunctions due to shunts, a first waiting time period (T1) is waited for with loop closure indication by the indication circuit (I) from the "idle" state of operation before the setting-up of a call is concluded, or, if a loop interruption is indicated during this first waiting time period (T1), a second waiting time period (T2) is waited before a corresponding message is emitted, or, if a loop closure is again indicated during this second waiting time period (T2), a blocking of the subscriber line (TL) against a seizure is effected, characterized in that the indication circuit (I) is set in such a manner that it has less sensitivity with respect to the response of the loop closure indication with the presence of the "call" state of operation of the subscriber line (TL) than with the presence of the "idle" state of operation.